# EUROPEAN PATENT SPECIFICATION

(11) **EP 4 067 707 B1**
(45) Date of publication and mention of the grant of the patent: **04.11.2026**
(21) Application number: 20911118.6
(22) Date of filing: 04.09.2020
(51) Int. Cl.: F16K 1/04, F16K 1/32, F16K 31/04, F16K 31/50, F16N 1/00, F25B 41/35

(54) **ELECTRONIC EXPANSION VALVE AND AIR CONDITIONING SYSTEM USING SAME**
ELEKTRONISCHES EXPANSIONSVENTIL UND KLIMAANLAGE DAMIT
VANNE DE DÉTENTE ÉLECTRONIQUE ET SYSTÈME DE CLIMATISATION LE COMPRENANT

(30) Priority: 31.12.2019 CN 201922501978 U
(43) Date of publication of application: 05.10.2022
(73) Proprietor: Zhejiang Dunan Artificial Environment Co., Ltd., Shaoxing Zhejiang 311835 (CN)
(72) Inventor: ZHAN, Shaojun, Shaoxing, Zhejiang 311835 (CN); DI, Zhiqiang, Shaoxing, Zhejiang 311835 (CN); HE, Qiubo, Shaoxing, Zhejiang 311835 (CN)
(74) Representative: Petraz, Gilberto Luigi
(86) International application number: PCT/CN2020/113458
(87) International publication number: WO 2021/135348

(56) References cited:
- EP-A1- 3 064 811
- EP-A1- 3 792 528
- CN-A- 107 575 621
- CN-A- 107 575 621
- CN-U- 206 191 057
- CN-U- 207 584 047
- CN-U- 209 012 452
- CN-U- 209 180 369
- CN-U- 209 180 369
- JP-A- 2016 037 995

## Description

### TECHNICAL FIELD

The present invention relates to the field of air conditioning refrigeration, and in particular, to an electronic expansion valve and an air conditioning system using the same.

### BACKGROUND

An electronic expansion valve usually includes a valve body and a valve rod component, and a valve port of the valve body can be opened and closed by a movement of the valve rod component in a guide sleeve and a nut sleeve, so as to achieve a purpose of regulating a flow rate of a liquid, throttling and reducing pressure thereof. Therefore, the electronic expansion valve can be widely used in the technical field of air conditioning refrigeration. A valve needle component of a conventional electronic expansion valve can move with respect to the valve body to realize opening and closing of the electronic expansion valve. However, after the electronic expansion valve has been opened and closed many times, a grease loss or impurities may occur between a sealing member and the guide sleeve. Thus, a movement frictional resistance of the valve needle component may increase. In severe cases, the valve needle component may even become stuck, thus increasing a risk of failure of the electronic expansion valve, and reducing an operation stability and a service life of the electronic expansion valve.

CN209180369U discloses an electronic expansion valve, which includes a valve seat component and a valve core component mounted with the valve seat component. The valve seat component includes a valve seat, a valve seat core threading through one end of the valve seat, and a guide sleeve mounted within the other end of the valve seat. The valve core component includes a valve head slidably mounted within the guide sleeve, and a filament rod threading through the valve head. The valve head is provided coaxially with the valve seat core.

### SUMMARY

The invention is set out in the appended set of claims. Thus, it is desired to provide an electronic expansion valve. The electronic expansion valve includes a valve body, a valve needle component, and a guide sleeve. The guide sleeve is installed in the valve body and configured to guide a movement of the valve needle component. The valve needle component is arranged on the guide sleeve. The valve needle component includes a valve needle and a screw rod installed in the valve needle. A sealing groove configured for accommodating a sealing ring is provided in an outer side wall of the valve needle. And an oil storage groove is located between the guide sleeve and the valve needle.

**In** order to facilitate a uniform spread of grease in the oil storage groove, in some embodiments, the oil storage groove is located on the outer side wall of the valve needle, and the oil storage groove is annular and extends along a direction of circumference of the valve needle. As such, during a movement of the valve needle, the grease in the oil storage groove can be evenly spread between the outer side wall of the valve needle and an inner side wall of the guide sleeve along with the movement of the valve needle, and excess grease between the outer side wall of the valve needle and the inner side wall of the guide sleeve can also be contained in the oil storage groove. Therefore, the grease in the oil storage groove can be more evenly distributed.

**In** order to further improve a lubrication performance between the valve needle and the guide sleeve, in some embodiments, a number of the oil storage grooves is two, and the two oil storage grooves are spaced apart along a direction of an axis of the valve needle. As such, the grease needs to be stored in a single oil storage groove can be distributed in the two oil storage grooves, so that notches of respective oil storage grooves are set smaller, avoiding hindering the relative movement between the valve needle and the guide sleeve. **In** some embodiments, the number of oil storage grooves can also be set to more than three as required. However, the number of the oil storage grooves in the present invention is not limited thereto.

**In** order to improve a sealing performance between the valve needle and the guide sleeve, in some embodiments, the sealing groove is located between the two oil storage grooves. As such, a better sealing performance can be achieved between the valve needle and the guide sleeve. **In** addition, two oil storage grooves are arranged at both ends of the sealing groove, respectively, which is beneficial to a uniform and wide spread of the grease in the oil storage groove, and can effectively prevent the valve needle component from being stuck during movement.

**In** some embodiments, the oil storage groove is located on an inner side wall of the guiding sleeve, and the oil storage groove is annular and extends along a direction of circumference of the guiding sleeve. As such, the oil storage groove and the guide sleeve are in a relatively static state, and the grease in the oil storage groove is balanced with the movement of the valve needle. Excess grease in an annular gap between the valve needle and the guide sleeve is pushed into the oil storage groove by the guide sleeve, and excess grease in the oil groove will slide into the annular gap between the valve needle and the guide sleeve, thereby improving a lubrication effect.

In order to facilitate a processing of the oil storage groove, in some embodiments, a cross section of the oil storage groove is in a rectangular shape.

In order to store more grease in the oil storage groove, in some embodiments, a cross section of the oil storage groove is wedge-shaped, and a size of an opening of the oil storage groove is smaller than a size of a bottom thereof.

In some embodiments, the electronic expansion valve further includes a media inlet tube and a media outlet tube, wherein the media inlet tube and the media outlet tube are connected to and in communication with the valve body, so that a media fluid is capable of entering the electronic expansion valve via the media inlet tube and flowing out of the electronic expansion valve via the media outlet tube.

In some embodiments, the valve body is provided with a mounting chamber to accommodate the guide sleeve, and the guide sleeve is interference fit with the mounting chamber.

The present invention further provides an air conditioning system which includes any one of the above electronic expansion valves.

Compared with a conventional technology, the present invention has following advantages. During a relative movement of the valve needle component with respect to the valve body, grease in the oil storage groove between the valve needle and the guide sleeve can be spread evenly and widely between an outer surface of the valve needle and an inner surface of the guide sleeve along with the movement of the valve needle. Therefore, a grease loss during a long-term movement of the valve needle can be compensated, and a lubricity between the valve needle and the guide sleeve may be increased, thereby improving a running stability and prolonging a service life of the electronic expansion valve.

In addition, the movement of the valve needle with respect to the guide sleeve may further cause wear of some members/components of the electronic expansion valve, and thus tiny impurities may be produced. The tiny impurities can be pushed between the valve needle and the guide sleeve and contained in the oil storage groove, thereby reducing a risk of the valve needle being stuck in motion.

### BRIEF DESCRIPTION OF THE DRAWINGS

In order to better describe and explain the embodiments and/or examples of those inventions disclosed herein, one or more drawings may be referred to. The additional details or examples used to describe the drawings should not be considered as limiting the scope of any of the disclosed inventions, the currently described embodiments and/or examples, and the best mode of these inventions currently understood.
FIG. 1 is a perspective schematic view of an electronic expansion valve with some parts being omitted in some embodiments of the present invention.
FIG. 2 is a half sectional schematic view of the electronic expansion valve shown in FIG. 1.
FIG. 3 is a sectional schematic view of the electronic expansion valve with some parts being omitted shown in FIG. 1.
FIG. 4 is an enlarged structural schematic diagram of part A of the electronic expansion valve shown in FIG. 3.
FIG. 5 is a structural schematic diagram of FIG. 4 in another embodiment.
FIG. 6 is a structural schematic diagram of FIG. 4 in another embodiment.
FIG. 7 is a structural schematic diagram of a valve needle of the electronic expansion valve shown in FIG. 1.

Description of reference numerals of main elements are as follows. 100 represents an electronic expansion valve; 101 represents a media inlet tube; 102 represents a media outlet tube; 103 represents an axis; 10 represents a valve body; 11 represents a valve port; 12 represents a valve chamber; 13 represents a mounting chamber; 14 represents a guide sleeve; 141 represents an oil storage groove; 15 represents a sealing ring; 16 represents a fixing plate; 161 represents a mounting hole; 20 represents a valve needle component; 21 represents a valve needle; 211 represents an oil storage groove; 212 represents a sealing groove; 30 represents a screw rod component; 31 represents a screw rod; 32 represents a nut sleeve; 40 represents a sleeve; 50 represents a rotor component; and 51 represents a rotor.

### DETAILED DESCRIPTION

Hereinafter, the technical solutions in the embodiments of the present invention will be clearly and completely described with reference to the accompanying drawings in the embodiments of the present invention. Obviously, the described embodiments are merely a part of the embodiments of the present invention, rather than all of the embodiments. The invention is solely limited by the appended claims.

It should be noted that when a component is referred to as being "arranged" on another component, it may be directly arranged on the other component or an intervening component may be presented. When a component is considered to be "disposed" on another component, it may be directly disposed on the other component or an intervening component may be presented at the same time. When a component is considered to be "fixed" to another component, it may be directly fixed to the other component or an intervening component may be presented at the same time.

Unless otherwise defined, all technical and scientific terms used herein have the same meaning as commonly understood by one skilled in the art to which the present invention pertains. The terminology used in the description of the present invention is for the purpose of describing particular embodiments only and is not intended to limit the invention. As used herein, the term "or/and" includes any and all combinations of one or more associated listed items.

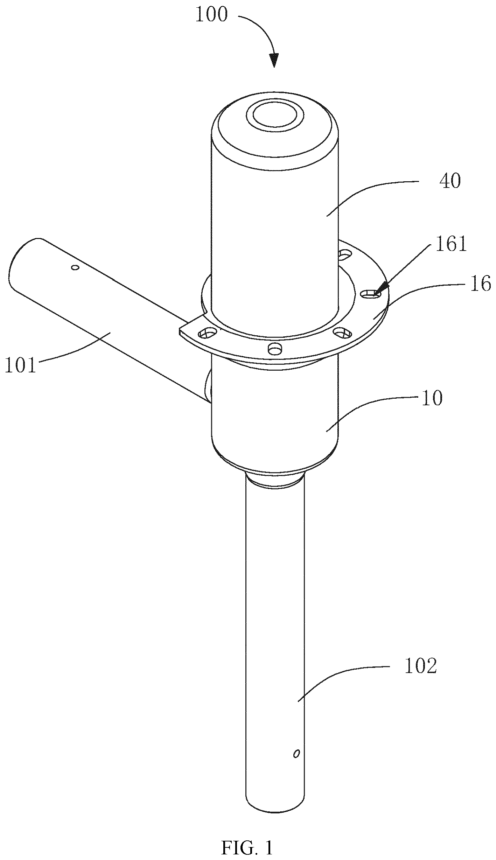

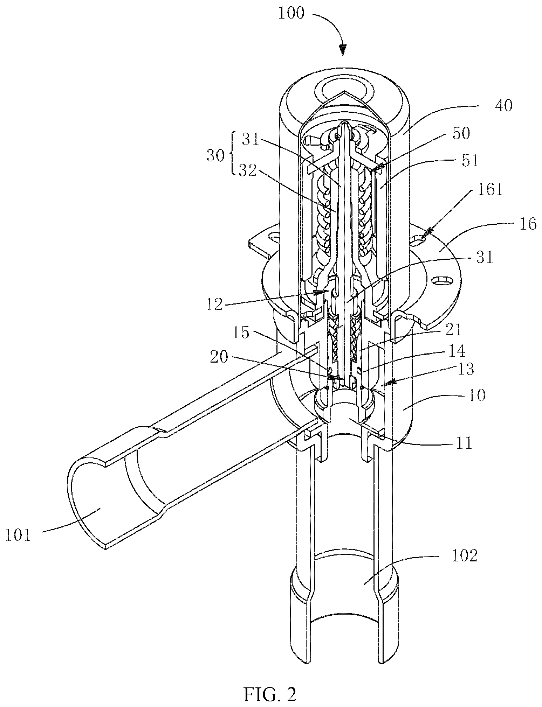

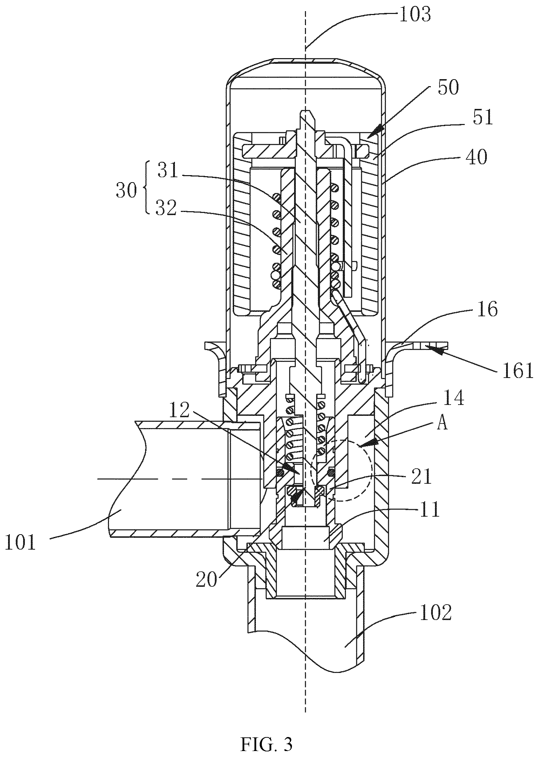

FIG. 1 is a perspective schematic view of an electronic expansion valve 100 with some parts being omitted in some embodiments of the present invention, FIG. 2 is a half sectional schematic view of the electronic expansion valve 100 shown in FIG. 1, and FIG. 3 is a sectional schematic view of the electronic expansion valve 100 with some parts being omitted shown in FIG. 1. The electronic expansion valve 100 may be configured to adjust a flow rate and a pressure of a fluid media.

In the present embodiment, the electronic expansion valve 100 may be applied to an air conditioning system, and the fluid media flowing through the electronic expansion valve 100 may be a refrigerant used for heat exchange in the air conditioning system. Meanwhile, the electronic expansion valve 100 may be installed at an entrance of an evaporator of the air conditioning system. As a boundary element between a high-pressure side and a low-pressure side of the air conditioning system, the electronic expansion valve 100 may throttle and reduce a pressure of a high-pressure liquid refrigerant in devices such as a receiver dryer, thereby adjusting and controlling a dosage of the liquid refrigerant entering the evaporator, so that the dosage of the liquid refrigerant can meet requirements of an external refrigeration load.

In other embodiments, the electronic expansion valve 100 may also be applied to other types of refrigeration equipment other than the air conditioning system, and the fluid media flowing through the electronic expansion valve 100 may also be other fluid media besides the refrigerant, as long as the electronic expansion valve 100 can throttle and reduce the pressure of the fluid media.

The electronic expansion valve 100 may include a valve body 10, a valve needle component 20, a screw rod component 30, a sleeve 40, a rotor component 50, and a stator component (not shown). The valve needle component 20, the screw rod component 30, and the sleeve 40 may be mounted on the valve body 10. An end of the screw rod component 30 may be connected with the valve needle component 20, and another end thereof may be connected with the rotor component 50. Both the rotor component 50 and the stator component may be disposed on the sleeve 40. The valve body 10 may be configured to support the valve needle component 20, the screw rod component 30, and the sleeve 40. The valve needle component 20 may be configured to control opening or closing of the electronic expansion valve 100. The screw rod component 30 may be configured to drive the valve needle component 20 to move. The sleeve 40 may be configured to isolate the valve needle component 20, the screw rod component 30, and the rotor component 50 from an external environment, thereby protecting the valve needle component 20, the screw rod component 30 and the rotor component 50. The rotor component 50 may be configured to drive the screw rod component 30 to move, and the stator component may be configured to drive the rotor component 50 to move.

The stator component may generate a magnetic field when energized, and may drive the rotor component 50 to rotate by a magnetic field force. The rotor component 50 may drive the screw rod component 30 to move. The valve needle component 20 may control an opening or a closing of the electronic expansion valve 100 under the drive of the screw rod component 30, so that a process of regulating the flow rate and the pressure of the fluid media by the electronic expansion valve 100 may be implemented.

The valve body 10 may be connected to and in communication with a media inlet tube 101 and a media outlet tube 102. The media fluid may enter the electronic expansion valve 100 via the media inlet tube 101, and may flow out of the electronic expansion valve 100 via the media outlet tube 102. The valve body 10 may be provided with a valve port 11, a valve chamber 12, and a mounting chamber 13 in sequence along an axis 103 thereof.

The valve port 11 and the media outlet tube 102 may communicate with each other. The valve port 11 may allow the valve needle component 20 to extend in, thereby blocking the fluid media in the electronic expansion valve 100 from being discharged through the valve port 11.

The valve chamber 12 is configured for accommodating a part of the valve needle component 20. The fluid media may flow into the valve port 11 via the valve chamber 12. A guide sleeve 14 for guiding a movement of the valve needle component 20 may further be provided inside the valve body 10. The guide sleeve 14 may be fixed in the mounting chamber 13.

The valve needle component 20 may include a valve needle 21 installed in the guide sleeve 14 and a screw rod 31 installed in the valve needle 21. The screw rod 31 may have an axis which coincides with the axis 103 of the valve body 10. An end of the valve needle 21 may be connected with the screw rod component 30, and another end thereof may coordinate with the valve port 11. The screw rod 31 may drive the screw rod component 30 to move, so as to control an opening or a closing of the valve port 11, thereby realizing opening or closing of the electronic expansion valve 100.

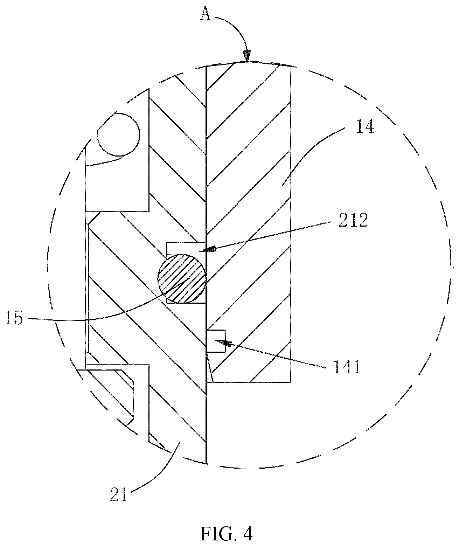

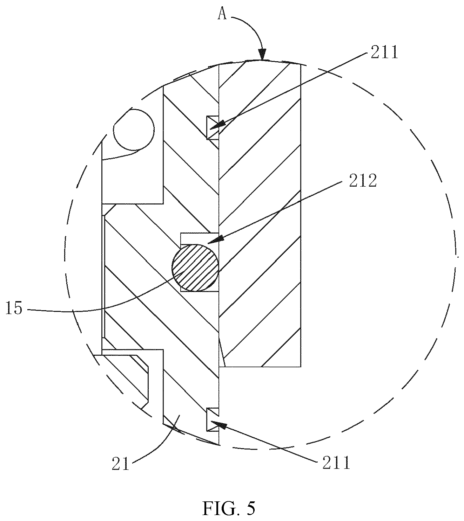

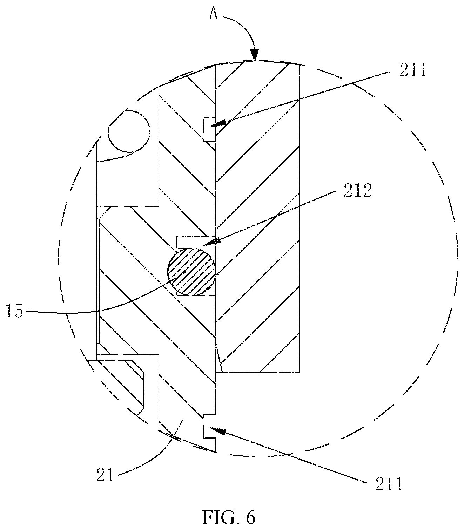

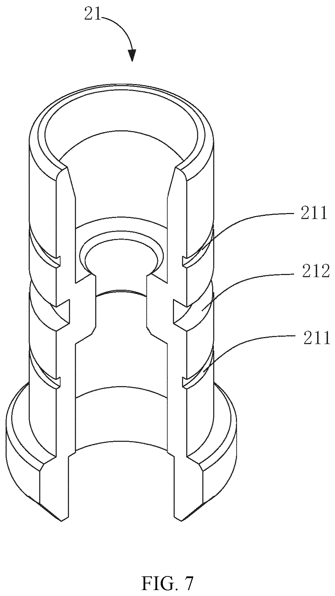

FIG. 4 is an enlarged structural schematic diagram of part A of the electronic expansion valve 100 shown in FIG. 3, FIG. 5 is a structural schematic diagram of FIG. 4 in another embodiment, FIG. 6 is a structural schematic diagram of FIG. 4 in another embodiment, and FIG. 7 is a structural schematic diagram of the valve needle 21 of the electronic expansion valve 100 shown in FIG. 1.

In the present embodiment, an oil storage groove 141, 211 is provided between the guide sleeve 14 and the valve needle 21. During a relative movement of the valve needle component 20 with respect to the valve body 10, grease in the oil storage groove 141, 211 between the valve needle 21 and the guide sleeve 14 is spread evenly and widely between an outer surface of the valve needle 21 and an inner surface of the guide sleeve 14 along with the movement of the valve needle 21. Therefore, a grease loss during a long-term movement of the valve needle 21 is compensated, and a lubricity between the valve needle 21 and the guide sleeve 14 is increased, thereby improving a running stability and prolonging a service life of the electronic expansion valve 100.

In addition, the movement of the valve needle 21 with respect to the guide sleeve 14 may further cause wear of some parts of the electronic expansion valve 100, and thus tiny impurities may be produced. The tiny impurities can be pushed between the valve needle 21 and the guide sleeve 14 and contained in the oil storage groove 141 or the oil storage groove 211, thereby reducing a risk of the valve needle 21 being stuck in motion.

Referring to FIG. 4, the oil storage groove 141 may be disposed on an inner side wall of the guide sleeve 14, and the oil storage groove 141 may be annular and extend along a direction of circumference of the guide sleeve 14. The oil storage groove 141 and the guide sleeve 14 may be in a relatively static state. The grease in the oil storage groove 141 may be balanced with the movement of the valve needle 21. Excess grease in an annular gap between the valve needle 21 and the guide sleeve 14 may be pushed into the oil storage groove 141 by the guide sleeve 14, and excess grease in the oil storage groove 141 will slide into the annular gap between the valve needle 21 and the guide sleeve 14, thereby improving a lubrication effect.

Referring to FIG. 5 to FIG. 7, an oil storage groove 211 is disposed on an outer side wall of the valve needle 21, and the oil storage groove 211 is annular and extend along a direction of circumference of the valve needle 21. During movement of the valve needle 21, grease in the oil storage groove 211 is spread evenly between the outer side wall of the valve needle 21 and an inner side wall of the guide sleeve 14 along with the movement of the valve needle 21. Excess grease between the outer side wall of the valve needle 21 and the inner side wall of the guide sleeve 14 is also accommodated in the oil storage groove 211, so that the grease in the oil storage groove 211 is more evenly distributed.

In the present embodiment, a number of the oil storage groove 211 is set to two, and the two oil storage grooves 211 are spaced apart along a direction of an axis of the valve needle 21. Grease that needs to be stored in a single oil storage groove 211 is distributed in the two oil storage grooves 211, so that notches of the respective oil storage grooves 211 are set smaller, avoiding hindering the relative movement between the valve needle 21 and the guide sleeve 14. In an embodiment, the number of oil storage groove 211 may also be set to more than three as required. However, the number of oil storage grooves 211 in the present invention is not limited thereto.

Furthermore, the outer side wall of the valve needle 21 is further provided with a sealing groove 212 for accommodating a sealing ring 15. The sealing groove 212 is disposed between the two oil storage grooves 211. Therefore, the valve needle 21 and the guide sleeve 14 are better sealed. In addition, the two oil storage grooves 211 are disposed at both ends of the sealing groove 212, respectively, which is beneficial to a uniform and wide spread of the grease in the oil storage grooves 211, and can effectively prevent the valve needle component 20 from being stuck during movement.

Furthermore, a cross section of the oil storage groove 141 or the oil storage groove 211 may be in a rectangular shape or may be wedge-shaped. A rectangular groove can be easily processed, and a wedge-shaped groove can store more grease in the groove. In an embodiment, on the premise that the technical effect of the present application is not affected, the cross section of the oil storage groove 141 or the oil storage groove 211 may also be in other regular or irregular shapes.

In the present embodiment, in order to further improve connection stability between the valve body 10 and the sleeve 40, the valve body 10 and the sleeve 40 may be fixed and connected to each other by welding. In other embodiments, the valve body 10 and the sleeve 40 may be fixed and connected to each other by other connection methods such as riveting, screwing, and glueing.

In the present embodiment, the valve body 10 may be made of stainless steel, and the valve body 10 may be substantially cylindrical. In other embodiments, the valve body 10 may also be manufactured by other materials, which will not be listed here. In addition, the valve body 10 may also be other shapes other than a cylindrical shape.

In the present embodiment, the guide sleeve 14 may be installed in the mounting chamber 13 and may be interference fit with the mounting chamber 13. Here, the interference fit means that a size of an inner diameter of the mounting chamber 13 minus a size of the guide sleeve 14 that is coordinated with the mounting chamber 13 is a negative value. The guide sleeve 14 may be configured to guide the valve needle component 20 to move along the axis 103 of the valve body 10.

In the present embodiment, considering a welding process in a furnace, the guide sleeve 14 may be made of stainless steel. The guide sleeve 14 may be substantially cylindrical. The guide sleeve 14 may be provided with a guide hole (not shown) penetrating through the guide sleeve 14 along an axis of the guide sleeve 14. The valve needle component 20 may be installed in the guide hole (not shown) and move under a guidance of the guide hole (not shown).

The stator component may include components such as coils, etc., to generate a magnetic field when energized, and may drive the rotor 51 to rotate by a magnetic field force, thereby driving the screw rod 31 to rotate.

In the present embodiment, the valve body 10 may be further provided with a fixing plate 16 for supporting and fixing a stator component. A plurality of mounting holes 161 may further be provided on the fixing plate 16. The plurality of mounting holes 161 may be configured to fix the stator component on the fixing plate 16.

In the present embodiment, the electronic expansion valve 100 may be a dynamoelectric electronic expansion valve, the rotor 51 may be a motor rotor which is made of a permanent magnet in a stepper motor, and the stator component may be a motor stator in the stepper motor. After receiving logic digital signals provided by a control circuit, the stepper motor may transmit the logic digital signals to each phase coil of the motor stator. In addition, the motor rotor that is made of a permanent magnet may rotate under a magnetic torque in the phase coil, thereby realizing a motion process that the stator component drives the rotor component to rotate.

Hereinafter, an operating principle of the electronic expansion valve 100 will be explained.

The stator component may generate a magnetic field when energized. The rotor 51 that is made of a magnetic material may rotate under the drive of the magnetic field. The rotor 51 may be fixed to the screw rod 31, thus a rotation of the rotor 51 may drive the screw rod 31 to rotate. The screw rod 31 and a nut sleeve 32 may form a nut-screw engagement. The nut sleeve 32 may be fixed on the valve body 10, thus a rotation of the screw rod 31 with respect to the nut sleeve 32 may drive the screw rod 31 to telescopically move with respect to the nut sleeve 32, so that the stator component may drive the rotor component 50 to move, and the rotor component 50 in turn may drive the screw rod component 30 to move.

The present invention further provides an air conditioning system (not shown) using the electronic expansion valve 100. Because the electronic expansion valve 100 is used in the air conditioning system, the reliability and the stability of the entire system can be improved, and a wider range of applications of the entire system can be achieved.

The electronic expansion valve 100 provided in the present invention may compensate for a grease loss when the guide sleeve 14 moves with respect to the valve needle 21 for a long time, and increase a lubricity between the valve needle 21 and the guide sleeve 14, thereby improving an operation stability and prolonging a service life of the electronic expansion valve 100. In addition, the air conditioning system using the electronic expansion valve 100 provided by the present invention may have a relatively high reliability and stability.

## Claims

1. An electronic expansion valve (100), comprising a valve body (10), a valve needle component (20), and a guide sleeve (14),
wherein the guide sleeve (14) is installed in the valve body (10) and configured to guide a movement of the valve needle component (20), the valve needle component (20) is arranged on the guide sleeve (14), the valve needle component (20) comprises a valve needle (21) and a screw rod (31) installed in the valve needle (21), **characterized in that** a sealing groove (212) configured for accommodating a sealing ring (15) is provided in an outer side wall of the valve needle (21), and an oil storage groove (211) is located between the guide sleeve (14) and the valve needle (21);
the oil storage groove (211) is located on the outer side wall of the valve needle (21), and the oil storage groove (211) is annular and extends along a direction of circumference of the valve needle (21);
the number of the oil storage groove (211) is two, the two oil storage grooves (211) are spaced apart along a direction of an axis (103) of the valve needle (21); and
the sealing groove (212) is located between the two oil storage grooves (211).

2. The electronic expansion valve (100) of claim 1, **characterized in that** a cross section of the oil storage groove (211) is in a rectangular shape.

3. The electronic expansion valve (100) of claim 1, wherein a cross section of the oil storage groove (211) is wedge-shaped, and a size of an opening of the oil storage groove (211) is smaller than a size of a bottom thereof.

4. The electronic expansion valve (100) of claim 1, **characterized by** further comprising a media inlet tube (101) and a media outlet tube (102), wherein the media inlet tube (101) and the media outlet tube (102) are connected to and in communication with the valve body (10), so that a media fluid is capable of entering the electronic expansion valve (100) via the media inlet tube (101) and flowing out of the electronic expansion valve (100) via the media outlet tube (102).

5. The electronic expansion valve (100) of claim 1, **characterized in that** the valve body (10) is provided with a mounting chamber (13) to accommodate the guide sleeve (14), and the guide sleeve (14) is interference fit with the mounting chamber (13).

6. An air conditioning system, **characterized by** comprising the electronic expansion valve (100) of any one of claims 1 to 5.

## Patentansprüche

1. Elektronisches Expansionsventil (100), umfassend einen Ventilkörper (10), eine Ventilnadelkomponente (20) und eine Führungshülse (14),
worin die Führungshülse (14) im Ventilkörper (10) installiert ist und dafür ausgelegt ist, eine Bewegung der Ventilnadelkomponente (20) zu führen, die Ventilnadelkomponente (20) an der Führungshülse (14) angeordnet ist, die Ventilnadelkomponente (20) eine Ventilnadel (21) und eine Schraubenstange (31) umfasst, die in der Ventilnadel (21) installiert ist, **dadurch gekennzeichnet, dass** eine Dichtungsnut (212), die dafür ausgelegt ist, einen Dichtungsring (15) aufzunehmen, in einer äußeren Seitenwand der Ventilnadel (21) vorgesehen ist, und eine Öllagerungsnut (211) zwischen der Führungshülse (14) und der Ventilnadel (21) gelegen ist;
die Öllagerungsnut (211) an der äußeren Seitenwand der Ventilnadel (21) gelegen ist, und die Öllagerungsnut (211) ringförmig ist und sich entlang einer Richtung des Umfangs der Ventilnadel (21) erstreckt;
die Anzahl der Öllagerungsnut (211) zwei ist, die zwei Öllagerungsnuten (211) entlang einer Richtung einer Achse (103) der Ventilnadel (21) beabstandet sind; und
die Dichtungsnut (212) zwischen den zwei Öllagerungsnuten (211) gelegen ist.

2. Elektronisches Expansionsventil (100) nach Anspruch 1, **dadurch gekennzeichnet, dass** ein Querschnitt der Öllagerungsnut (211) eine rechteckige Form hat.

3. Elektronisches Expansionsventil (100) nach Anspruch 1, worin ein Querschnitt der Öllagerungsnut (211) keilförmig ist, und eine Größe einer Öffnung der Öllagerungsnut (211) kleiner ist als eine Größe eines Bodens davon.

4. Elektronisches Expansionsventil (100) nach Anspruch 1, **dadurch gekennzeichnet, dass** es ferner ein Medieneinlassrohr (101) und ein Medienauslassrohr (102) umfasst, worin das Medieneinlassrohr (101) und das Medienauslassrohr (102) mit dem Ventilkörper (10) verbunden sind und damit in Kommunikation stehen, so dass ein Medienfluid dazu fähig ist, in das elektronische Expansionsventil (100) über das Medieneinlassrohr (101) einzutreten und aus dem elektronischen Expansionsventil (100) über das Medienauslassrohr (102) herauszuströmen.

5. Elektronisches Expansionsventil (100) nach Anspruch 1, **dadurch gekennzeichnet, dass** der Ventilkörper (10) mit einer Montagekammer (13) versehen ist, um die Führungshülse (14) aufzunehmen, und die Führungshülse (14) mit der Montagekammer (13) in Presspassung steht.

6. Klimaanlage, **dadurch gekennzeichnet, dass** sie das elektronische Expansionsventil (100) nach einem der Ansprüche 1 bis 5 umfasst.

## Revendications

1. Vanne de détente électronique (100), comprenant un corps de vanne (10), un composant de pointeau de vanne (20) et un manchon de guidage (14),
dans laquelle le manchon de guidage (14) est installé dans le corps de vanne (10) et configuré pour guider un mouvement du composant de pointeau de vanne (20), le composant de pointeau de vanne (20) est disposé sur le manchon de guidage (14), le composant de pointeau de vanne (20) comprend un pointeau de vanne (21) et une tige de vis (31) installée dans le pointeau de vanne (21), **caractérisé en ce qu'**une rainure d'étanchéité (212) configurée pour recevoir une bague d'étanchéité (15) est prévue dans une paroi latérale extérieure du pointeau de vanne (21), et une rainure de stockage d'huile (211) est située entre le manchon de guidage (14) et le pointeau de vanne (21) ;
la rainure de stockage d'huile (211) est située sur la paroi latérale extérieure du pointeau de vanne (21), et la rainure de stockage d'huile (211) est annulaire et s'étend le long d'une direction de circonférence du pointeau de soupape (21) ;
le nombre de la rainure de stockage d'huile (211) est de deux, les deux rainures de stockage d'huile (211) sont espacées le long d'une direction d'un axe (103) du pointeau de vanne (21) ; et
la rainure d'étanchéité (212) est située entre les deux rainures de stockage d'huile (211).

2. Vanne de détente électronique (100) selon la revendication 1, **caractérisée en ce qu'**une section transversale de la rainure de stockage d'huile (211) est de forme rectangulaire.

3. Vanne de détente électronique (100) selon la revendication 1, dans laquelle une section transversale de la rainure de stockage d'huile (211) est en forme de coin, et une taille d'une ouverture de la rainure de stockage d'huile (211) est plus petite qu'une taille d'un fond de celle-ci.

4. Vanne de détente électronique (100) selon la revendication 1, **caractérisée en ce qu'**elle comprend en outre un tube d'entrée de milieu (101) et un tube de sortie de milieu (102), dans laquelle le tube d'entrée de milieu (101) et le tube de sortie de milieu (102) sont connectés au corps de vanne (10) et en communication avec celui-ci, de sorte qu'un fluide de milieu peut entrer dans la vanne de détente électronique (100) par l'intermédiaire du tube d'entrée de milieu (101) et de s'écouler hors de la vanne de détente électronique (100) par l'intermédiaire du tube de sortie de milieu (102).

5. Vanne de détente électronique (100) selon la revendication 1, **caractérisée en ce que** le corps de vanne (10) est pourvu d'une chambre de montage (13) pour recevoir le manchon de guidage (14), et le manchon de guidage (14) est ajusté par interférence avec la chambre de montage (13).

6. Système de climatisation **caractérisé en ce qu'**il comprend la vanne de détente électronique (100) selon l'une quelconque des revendications 1 à 5.
